# EUROPEAN PATENT APPLICATION

(11) **EP 1 798 580 A1**
(43) Date of publication of application: **20.06.2007**
(21) Application number: 05388109.0
(22) Date of filing: 16.12.2005
(51) Int. Cl.: G02B 6/02, G02F 1/01

(54) **Optical fibre with photonic bandgap effect in the tapered region**

(71) Applicant: Danmarks Tekniske Universitet, 2800 Kgs. Lyngby (DK)
(72) Inventor: Alkeskjold, Thomas Tanggaard, 4040 Jyllinge (DK)
(74) Representative: Jensen, Peter Kim

(57) **Abstract**

The invention relates to an optical fibre (1) having a longitudinal direction and a cross section perpendicular thereto. The optical fibre (1) comprises a microstructure that comprises a core region (2), a cladding region surrounding said core region (2), and a number of axially oriented cladding elements (4), such as longitudinal extending holes, located in the cladding region, each having a cross-sectional dimension (d), such as a diameter. The optical fibre (1) has at least one longitudinally extending transition region (6) having a first end (7) and a second end (8), wherein the cross-sectional dimension of the individual cladding elements (4) changes from a first cross-sectional dimension (d1) at the first end (7) of said transition region (6) to a second cross-sectional dimension (d2) at the second end (8) of said transition region (6). The mutual perpendicular distance between said at least two cladding elements (4) changes from a first distance (A1) at the first end (7) of said transition region to a second distance (A2) at the second end (8) of said transition region. The optical fibre (1) exhibits a photonic bandgap effect in said at least one transition region.

## Description

The present invention relates to an optical fibre utilising a photonic bandgap effect for light propagation and having a longitudinal direction and a cross section perpendicular thereto, said optical fibre comprising a microstructure that comprises a core region, a cladding region surrounding said core region, and a number of axially oriented cladding elements, such as longitudinal extending holes, located in the cladding region, each having a cross-sectional dimension, such as a diameter, said optical fibre having at least one longitudinally extending transition region having a first end and a second end. By a photonic bandgap fibre is meant that fibre in at least one cross section of the fibre exhibits a photonic bandgap effect.

Optical fibres with or without tunability are used in a wide range of technical areas, such as optical communication, sensor technologies, imaging, lithography, opto-medical systems, material processing and so forth.

It is desirable to be able to shape the spectral properties for the light propagation of such a fibre and if possible on a short time scale and for a number of different wavelengths. This applies both to continuous wave systems and pulsed wave systems.

For optical communication, for example, it is desirable to be able to send signals at a high bit rate over long distances. This requires short light pulses of high intensity and fibres with little or no pulse distortion due to for instance dispersion or non-linear effects. As, over the years, communication has developed towards higher bit rates, there is a continuous need for improving properties of fibres, such as being able to shape the transmission spectrum of the fibre and the signal pulses and preferably with tunability.

Within the last couple of years a new type of optical fibre has shown the ability to guide light in a core surrounded by microstructured elements, which are elongated in the longitudinal direction of the fibre. Amongst others these fibres are known as photonic crystal fibres, photonic bandgap fibres and holey fibres.

Although existing photonic bandgap fibres and devices using such fibres have a number of advantageous properties, there is a continuous need for developing fibres with improved spectral transmission properties, preferably with tunability.

US 2005/0169590 discloses an optical fibre, which comprises a core region and a microstructured cladding region surrounding the core region. The cladding region includes a number of cladding elements or air holes, said cladding elements being arranged in a two-dimensional periodic manner or a Bragg-type of manner. At least a number of the cladding elements are filled in at least one longitudinally extending section of the optical fibre with a liquid crystal material. This section exhibits a photonic bandgap effect for at least one phase state of the liquid crystal. The optical properties of the crystal fibre can be changed by use of for instance heating means or electro-optical means. Thereby it is possible to change the spectral transmission bands of the optical fibre.

US 2002/0114574 discloses an microstructured fibre having a core region, a cladding region and one or more axially oriented elements, such as capillary air holes, in the cladding region. A portion of the microstructured fibre is treated by heating and stretching the fibre, thereby creating a tapered region. The specific treatment of the fibre is selected to provide a resultant fibre length that exhibits particular properties, such as mode contradiction leading to soliton generation or mode expansion.

US 2003/0169987 discloses a tunable optical fibre with a core having a certain refractive index and a cladding peripherally surrounding the core with a refractive index less than the refractive index of the core. At least one hollow region is disposed within the cladding in proximity to the core or within the core. A fluid being controllably moved within the hollow region modifies the effective index of the fibre and thereby tunes its characteristics. The fibre can comprise one or more tapered regions. The fibre uses index guiding for light propagation.

The purpose of the invention is to provide a new and improved fibre.

According to the invention, this is achieved by the cross-sectional dimension of the individual cladding elements changing from a first cross-sectional dimension at the first end of said transition region to a second cross-sectional dimension at the second end of said transition region, and by the mutual perpendicular distance between said at least two cladding elements changing from a first distance at the first end of said transition region to a second distance at the second end of said transition region, wherein the optical fibre exhibits a photonic bandgap effect along at least a part of said at least one transition region. This means that the fibre in at least one cross section of the transition region exhibits a photonic bandgap effect. The bandgap spectrum can change along the transition region due to the change of the dimensions and the centre to centre distances of the cladding elements.

Thereby it is possible to shape or form the spectral transmission properties of the fibre by proper design of the transition region. Basically the shape of the transition region should be chosen so that the transfer function of said transition region changes the transmission spectrum of a fibre without the transition region to the desired transmission spectrum.

The fibre can be an aircore photonic bandgap fibre, a solid core photonic bandgap fibre or an index guided fibre filled with material with a refractive index being higher than that of the background cladding material, thereby making the index guiding fibre a photonic bandgap fibre. The fibre can additionally comprise two or more core regions.

According to a preferred embodiment, a number of said cladding elements along at least a part of said transition region are filled with or consist of a material having a refractive index being higher than that of the cladding region. That is, the refractive index of the material in the cladding elements should be higher than that of the background cladding material. Part of the material can also be positioned outside the transition region.

According to another preferred embodiment, said cladding elements are cross-sectionally arranged in a substantially ring shaped or substantially periodic pattern, such as a honeycomb, triangular or hexagonal structure. A substantially periodic pattern means that the centre of the cladding elements is positioned in a substantially repetitive pattern when translated in each of two different direction, which for instance can represent a unit cell defined by two non-parallel vectors in the cross-sectional plane. The cladding elements can also be positioned in a substantially Bragg-type of manner, which means that the cladding elements are positioned substantially in concentric rings or circles around the core region. It is preferred to have at least 3 concentric rings or hexagonal rings, and typically 5-7 rings, in order for the fibre to exhibit an adequate photonic bandgap effect.

According to a preferred embodiment according to the invention, the optical properties of said material in the cladding elements are dependent on external influences, such as temperature, stress fields, electrical fields, magnetic fields and/or optical fields. Thereby it is possible to change the transmission spectrum of the optical fibre, making it tunable. It is also possible to design a self-compensating fibre, where the change in transmission spectrum accommodates for the changes of the surroundings, such as the ambient temperature.

According to a preferred embodiment, said material exhibits anisotropic optical properties. Thereby it is possible to achieve different transmission spectrums and/or tunability for different modes or polarisations of the light propagating in the fibre.

According to a particularly preferred embodiment according to the invention, said material in the cladding elements is a liquid crystal material. This material is especially sensitive to external influences, particularly to opto-electrical or thermal influences, thereby making the optical fibre highly tunable.

Preferably the optical fibre exhibits a photonic bandgap effect in said at least one transition region for at least one phase state of the liquid crystal material. The liquid crystal may comprise a dopant material for modifying its optical properties. The doping material can for instance be selected from a range of azobenzene or anthraquinone dyes, such at Disperse red 1, Disperse blue 1, Disperse orange or Methyl red from Sigma-Aldrich Co.

According to a preferred embodiment, the cross-sectional centre to centre distance between adjacent cladding elements and the cross-sectional dimension of said cladding elements are substantially constant. That is, the cladding elements have uniform sizes and centre to centre distances, which are also known as "pitch". Such uniformity may be preferred in order to optimise photonic bandgap effects. Preferably, the core region is provided by removing one or more of these cladding elements, the remainder of the cladding elements thereby constituting the surrounding cladding elements.

According to another preferred embodiment of the invention, the ratio between the cross-sectional dimension of the cladding elements and the centre to centre distance between cladding elements is substantially constant along the transition region.

According to a particularly preferred embodiment of fibre according to the invention, the shape of the transition area is adapted to change the spectrum of the light incoming to the first end of the transition region to a desired spectrum transmitted from the second end of the transition region. This can be done by designing the shape of the transition region, so that it has a particular transfer function.

According to a particular embodiment of the fibre, the cross-sectional dimension of the cladding elements and the distance between the individual cladding elements are linearly decreasing or increasing from the first end of said transition region to the second end of said transition region. Thereby it is possible to shape the transmission spectrum of the fibre to for instance a broadband Gaussian shape. It is also possible to design the transition region with a step-wise tapering, or the degree of tapering can be varying.

According to a preferred embodiment, the optical fibre further comprises means, such as thermal, electrical and/or optical means, for changing the optical properties or the state of the material filled or contained in said cladding elements. These means can be used to tune the transmission spectrum of the fibre.

According to another preferred embodiment of the fibre, said optical fibre is adapted to form a temperature gradient along said transition region by use of thermal means, such as a microheater. Thereby it is possible to change the bandwidth of the transmission spectrum. It is also possible to form an electric field gradient along the transition region, thereby achieving the same effect.

Preferably, the surface of the optical fibre is coated with a thermal conductive layer, such as a metal or epoxy. This yields a particular simple way to form the temperature gradient along the transition region.

According to a preferred embodiment, the core region and/or the cladding region is made from polymer, silica or another glass type. Thereby well-known optical fibre materials, for which production techniques exist, can be used.

According to an embodiment of the fibre, the core region and/or at least part of the cladding region comprises an active material, such as silica, doped with a rare earth element, preferably silica doped with Germanium, Fluorine, Erbium, Ytterbium, Neodymium, Holmium, Thulium, Samarium or combinations thereof.

According to an alternative embodiment of the fibre, the core region and/or at least part of the cladding region comprise a polymer, such as PMMA, doped with a dye or another gain material.

In a preferred embodiment, the cross-sectional dimension of said cladding elements at the first end of the transition region is in the range from 0.1 µm to 7 µm, such as from 1 µm to 5 µm.

In another preferred embodiment, the minimum centre-centre distance between said cladding elements at the first end of the transition region is in the range from 1 µm to 20 µm, such as from 2 µm to 10 µm or from 3 µm to 7 µm.

According to an embodiment of the fibre, said fibre further comprises a Bragg grating in the core region and/or in at least part of the cladding region, said Bragg grating being adapted to reflect light at a particular wavelength. Preferably, the Bragg grating is located in the transition region, thereby yielding a scheme for varying the optical characteristics of the Bragg grating. The Bragg grating can for instance be used to remove a pump signal from the transmitted light.

In a preferred embodiment of the fibre according to the invention, the ratio between the cross-sectional dimension of the cladding elements at the first end of the transition region and the cross-sectional dimension of the cladding elements at the second end of the transition region is larger than 1, preferably larger than 1.1, and less than or equal to 5, alternatively less than or equal to 3 and alternatively less than or equal to 2.

According to a particular embodiment of the fibre, said fibre comprises two adjacent transition regions. These can for instance be formed, when drawing the fibre or by splicing two fibres.

According to a preferred embodiment of the fibre, said material in the cladding elements is a liquid being movable in the longitudinal direction of the transition region. Preferably the fibre further comprises actuator means for controllably moving the movable liquid. The actuator means can for instance be a heater.

The fibre is especially applicable to light propagation of wavelengths between 300 nm and 3 µm, however, the invention is not restricted to these wavelengths.

The invention also relates to a fibre bundle comprising one or more of said optical fibres. The individual fibres in the fibre bundle can have different dimensions and different cladding materials.

The invention also relates to the use of said fibre in an optical coherence tomography system. The fibre is especially applicable to this use, since it is possible to design the fibre, so that it has a broadband Gaussian transmission spectrum with only small or no sidebands. Thus, the fibre is also highly applicable for use in low coherence reflectometry system.

The invention is explained in greater detail below with reference to the accompanying drawings, in which
Fig. 1 shows a cross section of an optical fibre according to the invention,
Fig. 2 a schematic view of a tapered fibre according to the invention,
Fig. 3 transmission spectra for non-tapered and tapered fibres, respectively,
Fig. 4 Fourier transformations of the transmission spectra,
Fig. 5 a tapered fibre with a positive temperature gradient along the transition region,
Fig. 6 a tapered fibre with a negative temperature gradient along the transition region,
Fig. 7 transmission spectra for tapered fibres with zero temperature gradient, negative temperature gradient and positive temperature gradient, respectively,
Fig. 8 a schematic view of a first embodiment of a fibre according to the invention with a movable fluid plug, and
Fig. 9 a schematic view of a second embodiment of a fibre according to the invention with a movable fluid plug.

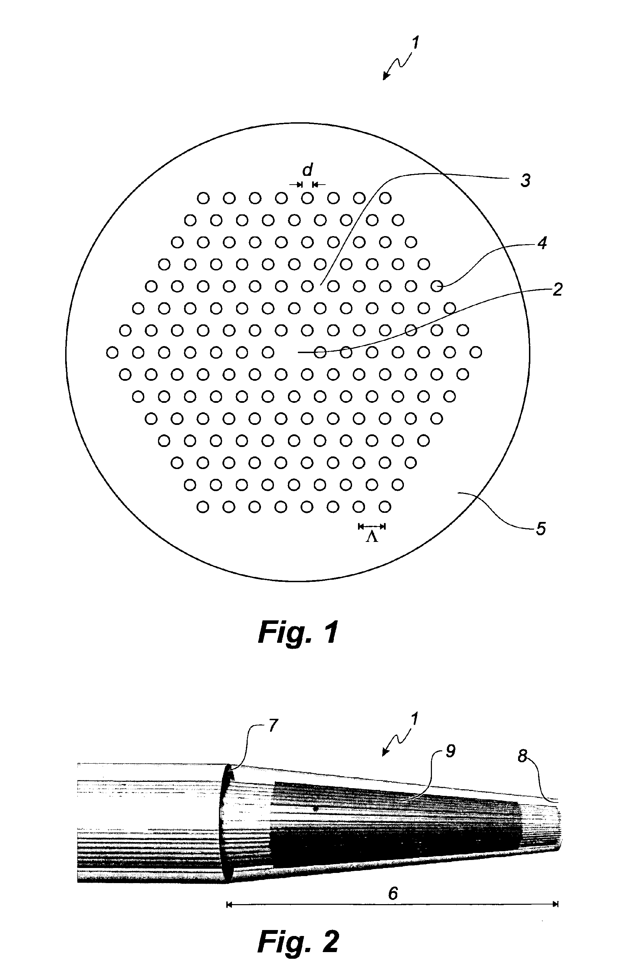

Fig. 1 schematically depicts the cross-section of an optical fibre 1 according to the invention. The optical fibre 1 comprises a core region 2 and a micro-structured cladding region surrounding said core region 2. The micro-structured cladding region comprises a number of cladding elements 4, for instance in form of a number of axially or longitudinally extending holes. The cladding elements are here of equal dimension or diameter (d), but variations can occur due to production variations. The cladding elements 4 are placed in a background cladding material 3 and an over-cladding region 5. The cladding elements 4 surrounding the core region 2 are positioned in a two-dimensional periodic lattice or a triangular structure. The core region 2 is preferably made from the same or a similar material as the background cladding material 3, for instance by removing one or more of the cladding elements 4 in the centre of the cross-section of the fibre 1. The fibre 1 uses the photonic bandgap effect for light propagation in the core 2 of the fibre 1. This means that the fibre 1 can guide light with wavelengths within different bands, which among others are determined by the structure and material contents of the cladding elements 4. This requires that the refractive index of the cladding elements 4 is higher than the refractive index of the background cladding material 3.
A configuration with a triangular pattern with seven "rings" as shown in Fig. 1 has shown a good photonic bandgap effect with a sharp bandgap. However, it is possible to design the fibre 1 with fewer or additional rings.

Fig. 2 shows a linearly tapered optical fibre 1 according to the invention. The fibre has a non-tapered part and a linearly tapered transition region 6. The transition region 6 has a first end 7 and a second end 8. At least a number of the cladding elements 4 in the transition region 6 are filled with or consist of a high refractive index material 9, such as for instance liquid crystal. The liquid crystal 9 can be in an isotropic phase or exhibit a specific mesophase, such as nematic, smectic and/or cholesteric. The holes 4 of the fibre can be filled with a desired high refractive index material by for instance use of capillary effects, pressure, vacuum or other means. The transmission spectrum of the fibre can be tuned by changing the optical properties of the liquid crystal. This can for instance be done by controlling the temperature of the fibre 1, thereby changing the refractive index of the liquid crystal. The thermal tuning can for instance be carried out by applying a resistive microheater and a thin conductive layer applied to at least a part of the surface of the fibre 1. By subjecting this layer to a voltage difference over at least a part of its physical extension, it is possible to control the temperature of the fibre 1.

The transmission spectrum can also be tuned by using electrical or optical fields. By use of electrical fields, it is for instance possible to achieve a polarisation dependent transmission spectrum.

The cladding elements 4 have a first diameter, d1, and a first centre-to-centre distance, Λ1, at the first end 7 of the tapered region 6, and a second diameter, d2, and a second centre-to-centre distance, Λ2, at the second end 8 of the tapered region 6. The diameter, d, of the cladding elements and the centre to centre distance Λ decreases linearly along the taper region 6.

Since the transmission spectrum of the optical fibre 1 is scalable to the structural dimensions of the fibre, i.e. the diameter d and/or the centre to centre distance A, the transmission spectrum is shifted spectrally along the taper region 6, since the structural dimensions are formed by the shape of taper profile. Different taper profiles can be utilised to obtain the desired spectrum, such as linearly, exponentially, Gaussian etc. In general, the taper region 6 should be shaped, so that the transfer function of the taper region 6 changes the transmission spectrum of the non-tapered part of the fibre 1 to the overall desired transmission spectrum.

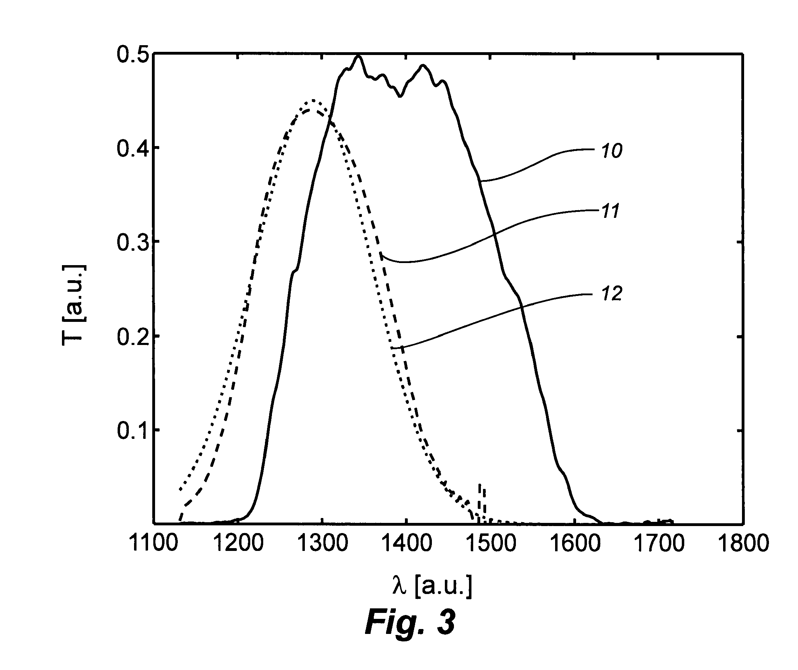

Fig. 3 shows a part of the transmission spectrum 10 for a non-tapered LMA-10 fibre from Crystal Fibre A/S, where approximately 10 mm of the holes are filled with a E7 liquid crystal from Merck, Darmstadt, Germany. This fibre has a diameter D = 125 µm, a centre to centre distance Λ = 7 µm, and a hole diameter d = 3 µm. The graph is plotted with the wavelength in nm as the x-axis and transmission in arbitrary units as the y-axis. The y-axis has a linear scale. However, the above mentioned dimensions are meant as an example only.

By forming a linearly tapered transition region 6 as shown in Fig. 2, so that Λ1 = 7 µm, Λ2 = 6 µm, d1 = 3 µm, and d2 = 2.57 µm, and with a longitudinal length of 10 mm, the overall transmission spectrum of the optical fibre 1 is changed to a transmission spectrum with a nearly Gaussian shape 11 as shown in Fig. 3. A Gaussian curve fit is also shown in the graph and is denoted with the reference numeral 12. Thus, it is possible to shape the spectrum from a broadband white light source to for instance a Gaussian broadband shape by use of the optical fibre 1. This is especially applicable for optical systems based on white light interferometry, such as optical coherence tomography (OCT), which can be used for clinical examination of skin cancer and the like.

In order to obtain a high resolution for white light interferometry systems, it is necessary to use a light source with a high bandwidth, for instance larger than 40 nm. In addition, it is necessary to have a high side-lope suppression ratio (SLSR) in order to reduce false echoes. In order to obtain a high SLSR, it is desirable to use a light source, which has a Gaussian transmission spectrum. By use of the tapered fibre 1 according to the invention, it is possible to spectrally filter the light from a white light source to have a Gaussian shape with a large bandwidth, for instance 200 nm as shown in the example in Fig. 3.

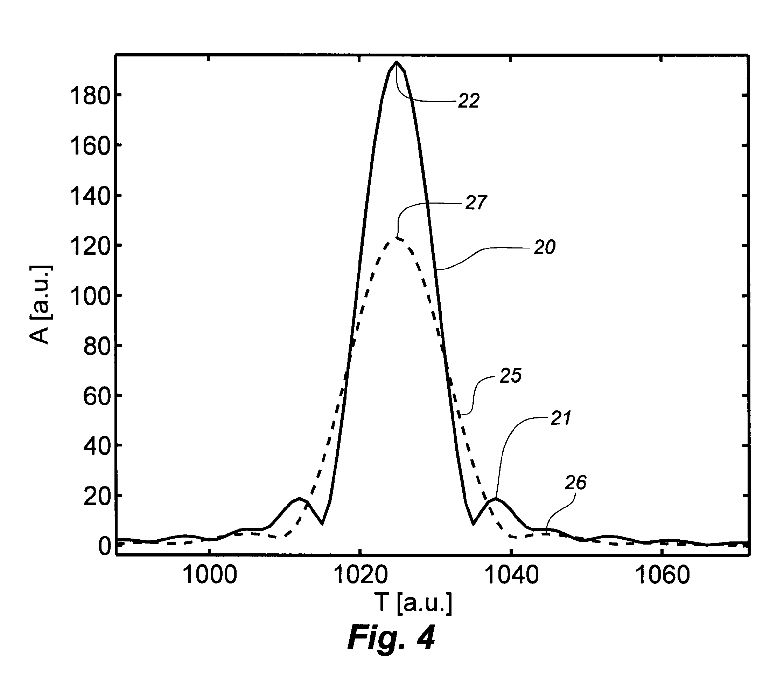

Fig. 4 shows the Fourier transformations of the transmission spectra shown in Fig. 3. The graph denoted with the reference numeral 20 shows the Fourier transformation of the transmission spectrum 10 of the non-tapered photonic bandgap fibre, while the graph denoted with the reference numeral 25 shows the Fourier transformation of the transmission spectrum 11 of the tapered photonic bandgap fibre 1 according to the invention. The SLSR is calculated as the ratio between the amplitude of the centre pulse 22, 27 and the amplitude of the so-called sidebands 21, 26 on both sides of the centre pulse 22, 27 for the non-tapered fibre and the tapered fibre 1, respectively. The SLSR for the non-tapered fibre is approximately 10, and the SLSR for the tapered fibre 1 is approximately 28. Thus, the SLSR is reduced by a factor 3 by tapering the fibre, thereby reducing the effect of false echoes significantly.

The transmission spectrum of the fibre 1 can be tuned by use of for instance thermal means, such as a microheater, or by means to introducing an optical or electrical field across the fibre 1. Since the optical properties, such as the refractive index, of the liquid crystal are highly dependent on such influences, it is possible to tune the transmission spectrum of the fibre 1. By increasing the overall temperature of the fibre 1, the transmission spectrum can for instance be shifted towards higher wavelengths, while a decrease of the overall temperature introduces a shift towards lower wavelengths. The general tuning of fibres with liquid crystals is more thoroughly described in US 2005/0169590.

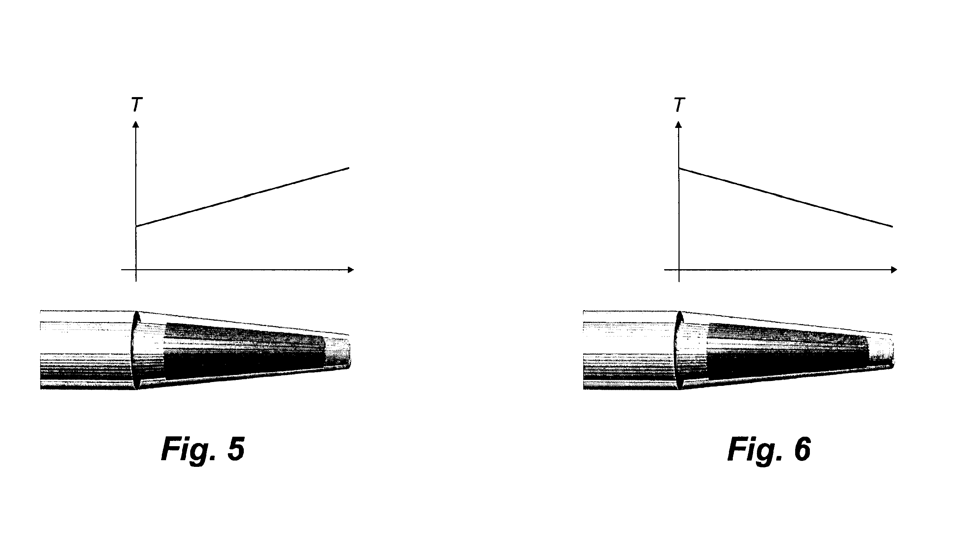

However, it is also possible to tune the bandwidth of the transmission spectrum by introducing a temperature gradient along the taper region 6. By introducing a positive temperature gradient along the taper region 6 as shown in Fig. 5, it is possible to increase the bandwidth of the transmission spectrum, while it is possible to decrease the bandwidth of the transmission spectrum by introducing a negative temperature gradient along the taper region as shown in Fig. 6. A positive temperature gradient is defined as a temperature gradient, where the second end 7 of the taper region 6 has a higher temperature than the first end 8 of the taper region 6. A negative temperature gradient is defined as a temperature gradient, where the second end 7 of the taper region 6 has a lower temperature than the first end 8 of the taper region 6. The temperature gradient can be achieved by applying a thermal conductive layer, such as gold or thermal conductive epoxy, on the surface of the fibre 1.

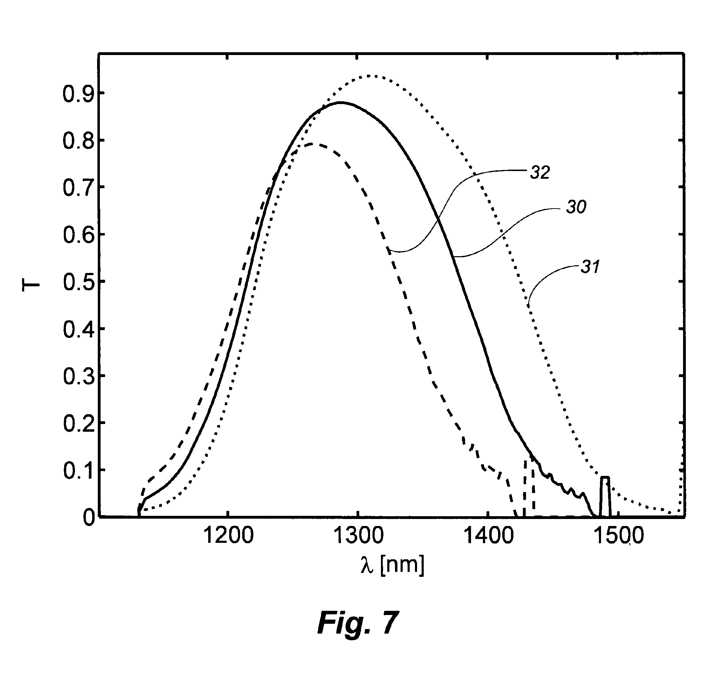

Fig. 7 shows the transmission spectra for a fibre with a zero gradient or uniform temperature distribution, a positive temperature gradient, and a negative temperature gradient, respectively. The graph denoted with the reference numeral 30 shows the transmission spectrum for a fibre with a uniform temperature distribution. The graph denoted with the reference numeral 31 shows the transmission spectrum for a fibre with a negative temperature gradient along the taper region 6 as shown in Fig. 6. It is seen that the centre wavelength of the transmission spectrum is shifted slightly towards lower wavelength, but more prominently that the bandwidth has decreased significantly. Similarly, the graph denoted with the reference numeral 32 shows the transmission spectrum for a fibre with a positive temperature gradient along the taper region 6 as shown in Fig. 5. It is seen that the centre wavelength of the transmission spectrum is shifted slightly towards higher wavelength, but more prominently that the bandwidth has increased significantly.

Thereby, it is possible to thermally tune the transmission of the optical fibre 1 to a transmission spectrum with a desired centre wavelength and bandwidth, by controlling the overall temperature of the fibre and introducing a temperature gradient along the taper region 6, respectively. These tuning possibilities are dependent on the material 9 used. For instance, if using a different material from that described above, it is possible that a positive temperature gradient along the transition region 6 will provide a decrease in bandwidth and that a negative temperature gradient will provide an increase in bandwidth.

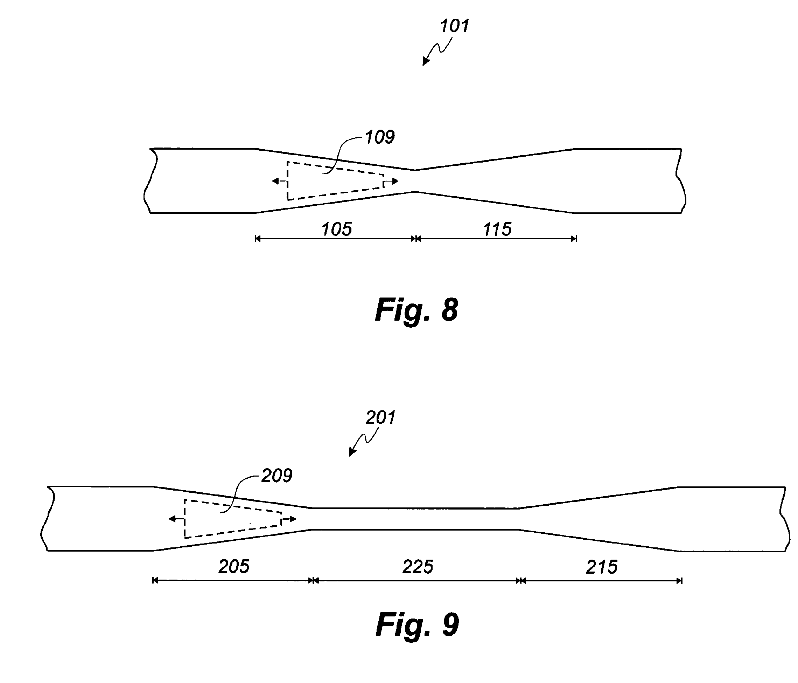

Fig. 8 shows a schematic illustration of another embodiment of a fibre 101 according to the invention. This fibre basically consists of two tapered fibres corresponding to the fibre 1 shown in fig. 1 and 2. Thus the fibre 101 comprises a first taper region 105 and a second taper region 115. At least a number of the air holes of the fibre 101 are filled with a liquid crystal along a longitudinal part of the fibre 101, said liquid crystal making up a fluid "plug" 109, which is movable along the longitudinal part of the fibre 101. This configuration can be obtained by filling one of the previous mentioned fibres 1 with a liquid crystal using the capillary effect and splicing this fibre with a corresponding fibre without the liquid crystal material. This yields an alternative way of tuning the optical fibre according to the invention. The position of the liquid plug can for instance be controlled by use of two thin film resistive microheaters positioned on each side of the liquid plug. The microheaters control the temperature of the sealed air channels on each side of the liquid plug and thereby also the thermal expansion of the air. This air expansion can then be used to pump the liquid plug in the longitudinal direction of the fibre 101 and thereby control the position of the plug 109. This type of tuning is more thoroughly described in US2003/0169987.

An alternative embodiment of a fibre 201 with a movable fluid plug 209 is depicted in Fig. 9. This fibre 201 has a first taper region 205, a second taper region 215 and a non-tapered region 225 between the two taper regions 205, 215. A movable fluid plug 209, preferably consisting of liquid crystal, is movable along the longitudinal direction of the fibre 201.

The invention has been described with reference to a preferred embodiment. However, the scope of the invention is not limited to the illustrated embodiment, and alterations and modifications can be carried out without deviating from said scope of the invention. For instance, the cladding elements need not be positioned in a triangular pattern, but can for instance instead be positioned in a honeycomb pattern or in concentric circles corresponding to a Bragg grating. The fibre can also be designed, so that it has different hole sizes but still with a cross-sectional periodicity. For instance, the fibre can comprise holes of two different sizes, and where these holes are positioned in two different periodic patterns.

### List of reference numerals

- 1: Optical fibre
- 2: Core region
- 3: Background cladding material
- 4: Cladding elements
- 5: Over-cladding region
- 6: Transition region / taper region
- 7: First end
- 8: Second end
- 9: High refractive index material / liquid crystal
- 10: Spectrum from non-tapered photonic bandgap fibre
- 11: Spectrum from linearly tapered photonic bandgap fibre
- 12: Gaussian fit
- 20: Fourier transform for non-tapered photonic bandgap fibre
- 21: Sidelope / sideband
- 25: Fourier transform for linearly tapered photonic bandgap fibre
- 26: Sidelope / sideband
- 30: Transmission spectrum for zero temperature gradient
- 31: Transmission spectrum for positive temperature gradient
- 32: Transmission spectrum for negative temperature gradient
- 101: Optical fibre
- 105: First taper region
- 109: Fluid plug
- 115: Second taper region
- 201: Optical fibre
- 205: First taper region
- 209: Fluid plug
- 215: Second taper region
- 225: Non-tapered region
- d: Diameter of cladding element
- A: Centre to centre distance between cladding elements
- D: Diameter of fibre

## Claims

1. An optical fibre (1) utilising a photonic bandgap effect for light propagation and having a longitudinal direction and a cross section perpendicular thereto, said optical fibre (1) comprising a microstructure that comprises
- a core region (2),
- a cladding region, surrounding said core region (2), and
- a number of axially oriented cladding elements (4), such as longitudinal extending holes, located in the cladding region, each having a cross-sectional dimension (d), such as a diameter,
said optical fibre (1) having at least one longitudinally extending transition region (6) having a first end (7) and a second end (8), wherein
- the cross-sectional dimension of the individual cladding elements (4) changes from a first cross-sectional dimension (d1) at the first end (7) of said transition region (6) to a second cross-sectional dimension (d2) at the second end (8) of said transition region (6), and
- the mutual perpendicular distance between said at least two cladding elements (4) changes from a first distance (A1) at the first end (7) of said transition region to a second distance (A2) at the second end (8) of said transition region, and wherein
- the optical fibre (1) exhibits a photonic bandgap effect along at least a part of said at least one transition region.

2. Optical fibre (1) according to claim 1, wherein a number of said cladding elements (4) along at least a part of said transition region (6) are filled with or consist of a material (9) having a refractive index being higher than that of the cladding region (3).

3. Optical fibre (1) according to any of the preceding claims, wherein said cladding elements (4) are cross-sectionally arranged in a substantially ring shaped or periodic pattern, such as a honeycomb, triangular or hexagonal structure.

4. Optical fibre (1) according to any of the preceding claims, wherein the optical properties of said material (9) in the cladding elements (4) are dependent on external influences, such as temperature, stress fields, electrical fields, magnetic fields or optical fields.

5. Optical fibre (1) according to any of the preceding claims, wherein said material (9) exhibits anisotropic optical properties.

6. Optical fibre (1) according to any of the preceding claims, wherein said material (9) in the cladding elements (4) is a liquid crystal material.

7. Optical fibre (1) according to any of the preceding claims, wherein the cross-sectional centre to centre distance (A) between adjacent cladding elements (4) and the cross-sectional dimension (d) of said cladding elements (4) are substantially constant.

8. Optical fibre (1) according to any of the preceding claims, wherein the ratio between the cross-sectional dimension (d) of the cladding element (4) and the centre to centre distance (A) are substantially constant along the transition region (6).

9. Optical fibre (1) according to any of the preceding claims, wherein the cross-sectional dimension (d) of the cladding elements (4) and the distance (A) between the individual cladding elements (4) are linearly decreasing or increasing from the first end (7) of said transition region (6) to the second end (8) of said transition region (6).

10. Optical fibre (1) according to any of the preceding claims, in which said optical fibre (1) is adapted to form a temperature gradient along said transition region (6) by use of thermal means, such as a microheater.

11. Optical fibre (1) according to claim 9, wherein the surface of the optical fibre (1) is coated with a thermal conductive layer, such as a metal or epoxy.

12. Optical fibre (1) according to any of the preceding claims, wherein the cross-sectional dimension (d) of said cladding elements (4) at the first end (7) of the transition region (6) is in the range from 0.1 µm to 7 µm, such as from 1 µm to 5 µm.

13. Optical fibre (1) according to any of the preceding claims, wherein the minimum centre-centre distance (A) between said cladding elements (4) at the first end (7) of the transition region (6) is in the range from 1 µm to 20 µm, such as from 2 µm to 10 µm or from 3 µm to 7 µm.

14. Optical fibre (1) according to any of the preceding claims, wherein the ratio between the cross-sectional dimension (d1) of the cladding elements (4) at the first end (7) of the transition region (6) and the cross-sectional dimension (d2) of the cladding elements (4) at the second end (8) of the transition region (6) is larger than 1, preferably larger than 1.1, and less than or equal to 5, alternatively less than or equal to 3 and alternatively less than or equal to 2.

15. Optical fibre (1) according to any of the preceding claims, wherein the material (9) in the cladding elements (4) is a liquid being movable in the longitudinal direction of the fibre.

16. Optical fibre (1) according to claim 15 further comprising actuator means, such as a heater, for controllably moving the movable liquid.
